# EUROPÄISCHE PATENTSCHRIFT

(11) **EP 2 569 204 B1**
(45) Veröffentlichungstag und Bekanntmachung des Hinweises auf die Patenterteilung: **31.12.2014**
(21) Anmeldenummer: 11713183.9
(22) Anmeldetag: 31.03.2011
(51) Int. Cl.: B62D 5/00, B62D 15/02, G05D 1/02, B60W 30/06

(54) **VERFAHREN ZUM EINPARKEN EINES FAHRZEUGS SOWIE ENTSPRECHENDES EINPARKASSISTENZSYSTEM UND FAHRZEUG**
PROCESS FOR AUTOMATIC PARKING OF A VEHICLE AND CORRESPONDING ASSISTING SYSTEM AND VEHICLE
PROCEDE D'STATIONNEMENT AUTOMATIQUE D'UN VEHICULE ET LES CORRESPONDANTES SYSTEMES D'ASSISTANCE ET VEHICULE

(30) Priorität: 12.05.2010 DE 102010020204
(43) Veröffentlichungstag der Anmeldung: 20.03.2013
(73) Patentinhaber: Volkswagen Aktiengesellschaft, 38436 Wolfsburg (DE)
(72) Erfinder: HÜGER, Philipp, 38471 Rühen (DE); WUTTKE, Ulrich, 38126 Braunschweig (DE)
(86) Internationale Anmeldenummer: PCT/EP2011/001622
(87) Internationale Veröffentlichungsnummer: WO 2011/141096

(56) Entgegenhaltungen:
- EP-A2- 1 916 177
- EP-A2- 2 050 640
- DE-A1-102007 045 562
- US-B1- 6 275 754

## Beschreibung

Die vorliegende Erfindung betrifft ein Verfahren, um einen Einparkvorgang eines Fahrzeugs (semi-) automatisch durchzuführen, sowie ein entsprechendes Einparkassistenzsystem und ein entsprechendes Fahrzeug.

Die US 6 275 754 B1 beschreibt ein Einparkassistenzsystem gemäß dem Oberbegriff des Anspruchs 6.

Die DE 10 2007 045 562 A1, die EP 2 050 640 A2 und die EP 1 916 177 A2 bescheiben ein Verfahren zum Einparken eines Fahrzeugs.

Nach dem Stand der Technik, siehe beispielsweise DE 10 2007 009 745 A1, ist es bekannt, einen Einparkpfad abhängig von einem Hindernis, welches während des Einparkens erfasst wird, zu verändern.

Dagegen stellt sich die vorliegende Erfindung die Aufgabe, einen Einparkvorgang auch dann erfolgreich abzuschließen, wenn ein Hindernis das Einparken auf einer ursprünglich geplanten Position innerhalb einer Parklücke unmöglich macht.

Erfindungsgemäß wird diese Aufgabe durch ein Verfahren zum Einparken eines Fahrzeugs nach Anspruch 1, durch ein Einparkassistenzsystem nach Anspruch 6 und durch ein Fahrzeug nach Anspruch 8 gelöst. Die abhängigen Ansprüche definieren bevorzugte und vorteilhafte Ausführungsformen der vorliegenden Erfindung.

Im Rahmen der vorliegenden Erfindung wird ein Verfahren zum Einparken eines Fahrzeugs mit Hilfe eines Einparkassistenzsystems bereitgestellt. Das erfindungsgemäße Verfahren umfasst folgende Schritte:
- Automatisches Bestimmen einer Zielposition des Fahrzeugs innerhalb einer Parklücke. Dabei gilt ein Einparkvorgang des Einparkassistenzsystems dann als erfolgreich beendet, wenn das Fahrzeug die Zielposition erreicht.
- Automatisches Aktivieren eines Lenkeingriffs des Einparkassistenzsystems in eine Lenkung des Fahrzeugs, um den Einparkvorgang des Einparkassistenzsystems auszuführen.
- Automatisches Erfassen eines Zustands des Fahrzeugs während des Einparkvorgangs (während des aktivierten Lenkeingriffs), wobei dieser Fahrzeugzustand ein Erreichen der Zielposition durch das Fahrzeug verhindert.
- In Abhängigkeit von dem erfassten Fahrzeugzustand wird die Zielposition automatisch neu bestimmt.
- Der Einparkvorgang wird mit der neu bestimmten Zielposition fortgesetzt.

Indem die Zielposition neu bestimmt wird, wenn erfasst wird, dass die ursprüngliche Zielposition nicht erreichbar ist, kann der Einparkvorgang auch in diesem Fall erfolgreich abgeschlossen werden. Da der Fall, dass die ursprüngliche Zielposition nicht erreichbar ist, durch ein Erfassen eines Fahrzeugzustands entdeckt wird, kann dieser Fall oder dieser Fahrzeugzustand vorteilhafterweise auch in Situationen erfasst werden, welche durch die Umgebung des Fahrzeugs erfassende Sensoren, die nach dem Stand der Technik in solchen Fällen meist eingesetzt werden, nicht erfasst werden können. Die vorliegende Erfindung ermöglicht auch eine mehrfache Neubestimmung der Zielposition. D.h. wenn erfindungsgemäß erfasst wird, dass auch eine neu bestimmte Zielposition nicht erreichbar ist, wird die Zielposition nochmals neu bestimmt u.s.w.. Durch die Neubestimmung der Zielposition vermeidet die vorliegende Erfindung auch endlose Versuche, um eine nicht zu erreichende Zielposition doch noch zu erreichen, wie es nach dem Stand der Technik üblich ist.

Gemäß einer bevorzugten erfindungsgemäßen Ausführungsform handelt es sich bei der Parklücke um eine Querparklücke, welche im Wesentlichen senkrecht zu einer Fahrbahn oder Straße, an welcher die Querparklücke angeordnet ist, liegt. Gemäß dieser Ausführungsform liegt der Fahrzeugzustand, welcher das Erreichen der ursprünglichen Zielposition verhindert, dann vor, wenn ein Gangwechsel von einem Rückwärtsgang des Fahrzeugs in einen Vorwärtsgang des Fahrzeugs zu einem Zeitpunkt vorgenommen und erfasst wird, zu welchem sich zum einen das Fahrzeug zumindest teilweise innerhalb der Parklücke befindet oder die Parklücke zumindest teilweise überdeckt und zum anderen eine ausreichend geringe Schrägstellung des Fahrzeugs bezüglich der Querparklücke vorliegt, aber das Fahrzeug die Zielposition oder das Ende des ersten Rangierzugs noch nicht erreicht hat. Der Fahrzeugzustand liegt z.B. dann vor, wenn der Gangwechsel von dem Rückwärtsgang in den Vorwärtsgang entgegen einer Anweisung (insbesondere einer Fahrtrichtungsanzeige) des Assistenzsystems erfolgt. D.h. der Fahrzeugzustand liegt vor, wenn das Assistenzsystem über die Fahrtrichtungsanzeige noch eine weitere Rückwärtsfahrt des Fahrzeugs anzeigt, der Fahrer aber bereits den Vorwärtsgang einlegt, so dass das Fahrzeug zu früh vorwärts bewegt wird.

Wenn der Fahrer des Fahrzeugs bei einem (semi-) automatischen Einparkvorgang einen Gangwechsel vor dem Erreichen der Zielposition vornimmt, ohne das Einparkassistenzsystem zu deaktivieren, kann dies in der Regel nur daran liegen, dass der Fahrer ein Hindernis (beispielsweise einen Bordstein) erkannt hat, welches von den Sensoren des Fahrzeugs bisher nicht entdeckt wurde. Da sich das Fahrzeug bei diesem Zustand (beim Gangwechsel) meist dicht bei diesem Hindernis befindet, ist es vorteilhaft, die neue Zielposition abhängig von diesem Fahrzeugzustand, d.h. von der aktuellen Position des Fahrzeugs, vorzunehmen.

Gemäß dieser Ausführungsform überdeckt das Fahrzeug dann einen Teil der Parklücke, wenn eine Differenz, welche zwischen dem vorderen Ende der Parklücke und der Position der Mitte einer Hinterachse des Fahrzeugs definiert ist, einen positiven Wert aufweist (d.h. die Mitte der Hinterachse befindet sich bereits innerhalb der Parklücke bzw. die Mitte der Hinterachse hat sich beim Einparken über das vordere Ende der Parklücke in die Parklücke hinein bewegt). Dabei wird die Position der Mitte der Hinterachse bezüglich eines Koordinatensystems bestimmt, bei welchen Positionen innerhalb der Parklücke negative y-Werte aufweisen. Daher ist die Differenz positiv, wenn sich die Mitte der Hinterachse innerhalb der Parklücke befindet. Eine ausreichend geringe Schrägstellung des Fahrzeugs bezüglich der Querparklücke liegt gemäß dieser Ausführungsform dann vor, wenn ein Winkel zwischen der Längsachse des Fahrzeugs und der Längsachse der Parklücke kleiner als ein vorbestimmter Winkel (z.B. 15°) ist.

Die Zielposition kann dabei einen Zielabstand umfassen, welcher zwischen dem vorderen Ende der Parklücke und der Sollposition der Mitte der Hinterachse definiert ist. Dieser Zielabstand wird abhängig von der aktuellen Position des Fahrzeugs beim Gangwechsel neu bestimmt, indem der Zielabstand gleich dem Abstand zwischen dem vorderen Ende der Parklücke und der aktuellen Position der Mitte der Hinterachse abzüglich eines vorbestimmten Versatzes (z.B. 30 cm) bestimmt wird.

Bei der bevorzugten erfindungsgemäßen Ausführungsform wird die Zielposition bezüglich der Mitte der Hinterachse definiert. Dadurch wird die Zielposition zum einen durch den Zielabstand von dem vorderen Ende oder von der vorderen Kante der Parklücke definiert, wobei sich der Zielabstand entlang der Längsachse der Parklücke erstreckt, während das vordere Ende oder vordere Begrenzung der Parklücke im Wesentlichen senkrecht zu dieser Längsachse liegt. Zum anderen wird die Zielposition durch einen Abstand von den seitlichen Begrenzungen der Parklücke, welche sich im Wesentlichen parallel zu der Längsachse der Parklücke erstrecken, definiert. Bei einer Querparklücke verändert sich aufgrund des durch den Fahrzeugzustand erfassten Hindernisses vorteilhafterweise meist nur der Zielabstand, aber nicht der Abstand der neuen Zielposition von den seitlichen Begrenzungen der Parklücke. Durch den vorbestimmten Versatz weist das Fahrzeug beim Erreichen der Zielposition einen ausreichend großen Abstand von dem Hindernis (z.B. Bordstein) auf.

Unter der Annahme dass die Zielposition eine Sollposition der Mitte der Hinterachse des Fahrzeugs definiert, gilt der Einparkvorgang dann als erfolgreich beendet, wenn folgende drei Bedingungen erfüllt sind:
- Ein Abstand zwischen der aktuellen Lage der Mitte der Hinterachse und der Zielposition entlang der Längsachse der Parklücke liegt unterhalb eines ersten Schwellenwerts. D.h. das Fahrzeug bzw. die Mitte der Hinterachse hat den (neu bestimmten) Zielabstand erreicht.
- Ein Abstand zwischen der aktuellen Lage der Mitte der Hinterachse und der Zielposition senkrecht zu der Längsachse der Parklücke liegt unterhalb eines zweiten Schwellenwerts, welcher beispielsweise 8 cm beträgt.
- Der Winkel zwischen der Längsachse des Fahrzeugs und der Längsachse der Parklücke ist kleiner als ein dritter Schwellenwert, welcher beispielsweise 2° beträgt.

Im Rahmen der vorliegenden Erfindung wird auch ein Einparkassistenzsystem für ein Fahrzeug bereitgestellt. Dabei umfasst das Einparkassistenzsystem eine Steuerung, mindestens einen Sensor zur Erfassung einer Umgebung des Fahrzeugs und mindestens einen Zustandserfassungssensor. Mit dem mindestens einen Sensor wird eine Zielposition des Fahrzeugs innerhalb einer Parklücke bestimmt. Mit Hilfe des mindestens einen Zustandserfassungssensors wird der Fahrzeugzustand erfasst, welcher ein Erreichen der Zielposition verhindert. Mittels der Steuerung wird ein Lenkeingriff des Assistenzsystems in eine Lenkung des Fahrzeugs aktiviert, um dadurch den Einparkvorgang des Einparkassistenzsystems erfolgreich durchzuführen. Abhängig von dem erfassten Fahrzeugzustand wird die Zielposition neu bestimmt und der Einparkvorgang mit der neu bestimmten Zielposition fortgesetzt.

Die Vorteile des erfindungsgemäßen Einparkassistenzsystems entsprechen im Wesentlichen den Vorteilen des erfindungsgemäßen Verfahrens, welche vorab im Detail ausgeführt sind, so dass hier auf eine Wiederholung verzichtet wird.

Schließlich wird im Rahmen der vorliegenden Erfindung ein Fahrzeug bereitgestellt, welches ein erfindungsgemäßes Einparkassistenzsystem umfasst.

Die vorliegende Erfindung ist insbesondere für Fahrzeuge mit einem Einparkassistenzsystem geeignet, um ein (semi-) automatisches Einparken in eine Querparklücke durchzuführen. Selbstverständlich ist die vorliegende Erfindung nicht auf diesen bevorzugten Anwendungsbereich eingeschränkt, da die vorliegende Erfindung auch beim Einparken in eine Längsparklücke eingesetzt werden kann. Darüber hinaus lässt sich die vorliegende Erfindung zumindest prinzipiell auch bei Schiffen und Flugzeugen einsetzen.

Im Folgenden wird die vorliegende Erfindung anhand bevorzugter erfindungsgemäßer Ausführungsformen mit Bezug zu den Figuren im Detail beschrieben.
- In Fig. 1: wird dargestellt, unter welchen Bedingungen erfindungsgemäß eine Zielposition innerhalb einer Parklücke erreicht wird.
- In Fig. 2: wird dargestellt, wie durch ein Hindernis eine Zielposition erfindungsgemäß neu bestimmt wird.
- Fig. 3: stellt schematisch ein erfindungsgemäßes Fahrzeug mit einem erfindungsgemäßen Einparkassistenzsystem dar.

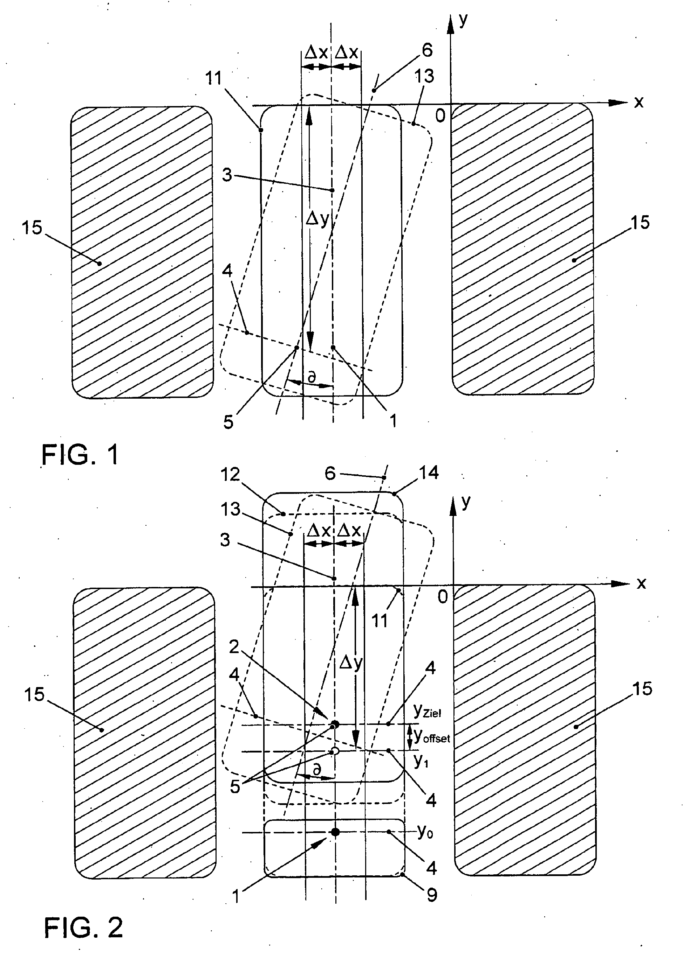

Mit Hilfe der Fig. 1 werden die drei Bedingungen erläutert, welche erfüllt sein müssen, damit ein (semi-) automatischer Einparkvorgang gemäß der vorliegenden Erfindung als erfolgreich beendet angesehen wird. Die Fig. 1 zeigt eine Zielposition 1, welche zu einem Fahrzeug 11 gehört, welches über seine Umrandung in Fig. 1 dargestellt ist. Als gestrichelte Umrandung 13 ist ein Fahrzeug 13 dargestellt, welches den (semi-) automatischen Einparkvorgang noch nicht erfolgreich beendet hat.

Die Zielposition 1 bezieht sich auf eine Mitte 5 einer Hinterachse 4 des einzuparkenden Fahrzeugs 13. D.h. die Zielposition 1 gilt als erreicht, wenn die Mitte 5 der Hinterachse 4 mit gewissen Toleranzen (Schwellenwerten) die Zielposition 1 erreicht hat.

Die drei oben genannten Bedingungen sind die folgenden:
1. Das Fahrzeug 13 befindet sich in einem Zielkorridor, welcher durch die Längsachse 3 der Parklücke und einen parametrierbaren Abstand Δx (z.B. 8 cm) definiert ist. Anders ausgedrückt ist ein Abstand zwischen der aktuellen Lage der Mitte 5 der Hinterachse 4 des Fahrzeugs 13 und der Zielposition 1 senkrecht zu der Längsachse 3 der Parklücke kleiner als der Abstand Δx.

Die Bedingung 1 ist in Fig. 1 nicht erfüllt.
2. Die Schrägstellung des Fahrzeugs 13 ist kleiner als ein parametrisierbarer Winkel (z.B. 2,0°). Anders ausgedrückt ist der Winkel ∂ zwischen der Längsachse 6 des Fahrzeugs 13 und der Längsachse 3 der Parklücke kleiner als der parametrisierbare Winkel.

Auch diese Bedingung 2 ist in Fig. 1 nicht erfüllt.
3. Die Fahrzeugfront des Fahrzeugs 13 ist bündig zu dem in Fig. 1 eingezeichneten Nullpunkt bzw. zu der dargestellten x-Achse. Anders ausgedrückt ist ein Abstand zwischen der aktuellen Lage der Mitte 5 der Hinterachse 4 und der Zielposition 1 in Richtung der Längsachse 3 der Parklücke kleiner als ein weiterer parametrisierbarer Abstand (z.B. 5 cm).

Diese Bedingung 3 ist in Fig. 1 erfüllt.

Da bezüglich des Fahrzeugs 13 zwei Bedingungen nicht erfüllt sind, ist der Einparkvorgang nicht erfolgreich beendet.

Anhand der Fig. 2 wird die Neubestimmung der Zielposition 1; 2 erläutert. In der Fig. 2 sind Fahrzeuge 11-14 wiederum durch ihre Umrandung 11-14 in verschiedenen Situationen dargestellt. Mit der gepunkteten Umrandung 11 wird ein Fahrzeug 11 in der ursprünglich geplanten Zielposition 1 dargestellt. Mit der schwach durchgezogenen Umrandung 12 wird ein Fahrzeug 12 in der Position oder zu dem Zeitpunkt dargestellt, zu welchem eine Neubestimmung der Zielposition 1; 2 stattfindet. Das Fahrzeug 13 mit der gestrichelten Umrandung 13 zeigt ein Fahrzeug, bei welchem die Bedingungen zur erfolgreichen Beendigung des Einparkvorgangs noch nicht erfüllt sind. Schließlich zeigt das Fahrzeug 14 mit der stark durchgezogenen Umrandung 14 ein Fahrzeug, welches erfolgreich bezüglich der neuen Zielposition 2 eingeparkt ist. Die restlichen bezüglich Fig. 2 nicht diskutierten Bezugszeichen entsprechen Elementen, welche mit Fig. 1 erläutert worden sind.

Im Folgenden wird ein Einparkvorgang gemäß der vorliegenden Erfindung anhand der Fig. 2 erläutert.

Beim Vorbeifahren an der Querparklücke zwischen zwei parkenden Fahrzeugen 15 wird die Querparklücke vermessen und die Zielposition 1 für die Mitte 5 der Hinterachse 4 festgelegt. Nach einem Einlegen des Rückwärtsganges und einer manuellen Aktivierung des Einparkassistenzsystems übernimmt das Einparkassistenzsystem über den Lenkeingriff die Lenkung bzw. Querführung des Fahrzeugs während die Längsführung (d.h. Gasgeben, Bremsen und Gangwechsel) nach wie vor dem Fahrer obliegt.

Beim Einparken in die Parklücke bemerkt der Fahrer ein Hindernis 9, in diesem Fall einen Bordstein 9, so dass er das Fahrzeug abbremst. Das Einparkassistenzsystem erfasst, dass sich das Fahrzeug 12 noch nicht an der Zielposition 1 befindet und dass der Fahrer einen Gangwechsel vom Rückwärtsgang in den Vorwärtsgang des Fahrzeugs durchführt. D.h. das Einparkassistenzsystem erfasst den Gangwechsel entgegen der aktuellen Anweisung des Einparkassistenzsystems, das Fahrzeug 10 weiter rückwärts zu fahren. Anschließend überprüft das Einparkassistenzsystem, ob das Fahrzeug 12 eine ausreichend kleine Schrägstellung (z.B. weniger als 15 °) bezüglich der Längsachse 3 der Parklücke aufweist und ob sich das Fahrzeug mit der Mitte 5 der Hinterachse 4 bereits innerhalb der Parklücke befindet (d.h. Δy ≥ 0 ). Δy entspricht dabei der Differenz des y-Werts der x-Achse (als vordere Kante oder Begrenzung der Parklücke) und des y-Werts y₁ der aktuellen Position der Mitte 5 der Hinterachse 4 des Fahrzeugs 12. Da das Koordinatensystem, wie es in Fig. 2 dargestellt ist, derart angeordnet ist, dass Positionen innerhalb der Parklücke negative y-Werte aufweisen, ist die Differenz Δy positiv, wenn sich die Mitte 5 der Hinterachse 4 des Fahrzeugs 12 innerhalb der Parklücke befindet. Bezüglich der Position und der Lage des Fahrzeugs 12 sind sowohl die Bedingung bezüglich der Schrägstellung (∂ < 15°) als auch bezüglich der Differenz (Δy ≥ 0) erfüllt. Daher bestimmt das Einparkassistenzsystem die Zielposition bezüglich ihres y-Wertes neu. Der neue y-Wert der neuen Zielposition 2' ergibt sich aus einer Summe des aktuellen y-Werts y₁ der aktuellen Position der Mitte 5 der Hinterachse 4 des Fahrzeugs 12 und einem Offset y_{offset} (z.B. 30 cm), so dass sich als neuer y-Wert für die neue Zielposition 2 y_{Ziel} ergibt.

Das nach wie vor aktive Einparkassistenzsystem versucht nun die neue Zielposition 2 zu erreichen. Für den in Fig. 2 dargestellten Fall muss das Fahrzeug 12 nur noch um den Offset (z.B. 30 cm) gerade nach vorn gezogen werden, um den Einparkvorgang erfolgreich abzuschließen.

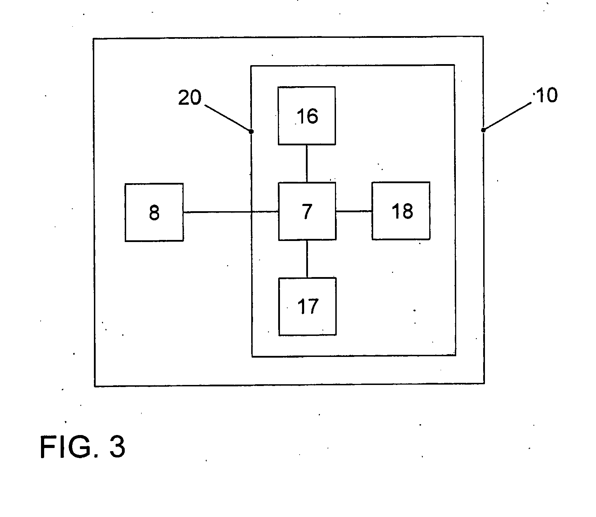

In Fig. 3 ist schematisch ein erfindungsgemäßes Fahrzeug 10 dargestellt, welches neben einem erfindungsgemäßen Einparkassistenzsystem 20 eine Lenkung 8 umfasst. Das Einparkassistenzsystem 20 umfasst seinerseits eine Steuerung 7, zumindest einen Umfeldsensor 16, einen Positionsbestimmungssensor 17 und einen Gangwechselerfassungssensor 18. Mit dem oder den Umfeldsensoren 16 vermisst das Einparkassistenzsystem 20 Parklücken, um eine Zielposition 1 zu bestimmen. Mit dem Positionsbestimmungssensor 17 bestimmt das Einparkassistenzsystem 20 die aktuelle Position des Fahrzeugs 10, um beispielsweise zu entscheiden, ob ein Einparkvorgang erfolgreich abgeschlossen worden ist. Mit dem Gangwechselerfassungssensor 18 erfasst das Einparkassistenzsystem 20 einen Gangwechsel des Fahrzeugs 10, beispielsweise vom Rückwärtsgang in den Vorwärtsgang. Bei einem Einparkvorgang mittels des erfindungsgemäßen Einparkassistenzsystems 20 greift die Steuerung 7 in die Lenkung 8 des Fahrzeugs 10 ein.

## Patentansprüche

1. Verfahren zum Einparken eines Fahrzeugs (10) unter Verwendung eines Einparkassistenzsystems (20), umfassend die Schritte
automatisches Bestimmen einer Zielposition (1) des Fahrzeugs (10) innerhalb einer Parklücke, wobei bei einem Erreichen der Zielposition (1) durch das Fahrzeug (10) ein Einparkvorgang des Einparkassistenzsystems (20) erfolgreich beendet wird,
automatisches Aktivieren eines Lenkeingriffs in eine Lenkung (8) des Fahrzeugs (10), um den Einparkvorgang des Einparkassistenzsystems (20) durchzuführen,
automatisches Erfassen eines Zustands des Fahrzeugs (10) während des Einparkvorgangs, welcher ein Erreichen der Zielposition (1) verhindert, und
automatisches Fortsetzen des Einparkvorgangs mit der Zielposition (2),
**gekennzeichnet durch**
automatische Neubestimmung der Zielposition (2) in Abhängigkeit von dem Zustand, und
**dadurch**, dass
das automatische Fortsetzen des Einparkvorgangs mit der Zielposition (2), welche neubestimmt wurde, durchgeführt wird.

2. Verfahren nach Anspruch 1,
**dadurch gekennzeichnet,**
**dass** die Parklücke eine Querparklücke ist, und
**dass** der Zustand vorliegt, wenn ein Gangwechsel von einem Rückwärtsgang des Fahrzeugs (10) in einen Vorwärtsgang des Fahrzeugs (10) zu einem Zeitpunkt erfasst wird, zu welchem das Fahrzeug (10) zumindest einen Teil der Parklücke überdeckt und eine ausreichend geringe Schrägstellung des Fahrzeugs (10) bezüglich der Parklücke vorliegt.

3. Verfahren nach Anspruch 2,
**dadurch gekennzeichnet,**
**dass** das Fahrzeug (10) zumindest einen Teil der Parklücke überdeckt, wenn eine Differenz (Δy), welche zwischen einem vorderen Ende (x) der Parklücke und einer Hinterachse (4) des Fahrzeugs (10) definiert ist, positiv ist, und
**dass** die ausreichend geringe Schrägstellung des Fahrzeugs (10) bezüglich der Parklücke vorliegt, wenn ein Winkel (∂) zwischen einer Längsachse (6) des Fahrzeugs (10) und einer Längsachse (3) der Parklücke kleiner als ein vorbestimmter Winkel ist.

4. Verfahren nach Anspruch 2 oder 3,
**dadurch gekennzeichnet,**
**dass** die Zielposition einem Zielabstand, welcher zwischen einer Hinterachse (4) des Fahrzeugs (10) und einem vorderen Ende (x) der Parklücke definiert ist, entspricht, und dass der Zielabstand in Abhängigkeit von dem Zustand neu bestimmt wird, indem der Zielabstand gleich einem Abstand zwischen einer aktuellen Position der Hinterachse (4)
des Fahrzeugs (10) und dem vorderen Ende (x) der Parklücke abzüglich eines vorbestimmten Versatzes (y_{offset}) bestimmt wird.

5. Verfahren nach einem der vorhergehenden Ansprüche,
**dadurch gekennzeichnet,**
**dass** die Zielposition eine Zielposition (1; 2) einer Hinterachse (4) des Fahrzeugs (10) definiert, und
**dass** der Einparkvorgang erfolgreich beendet wird, wenn folgende drei Bedingungen erfüllt sind:
• ein Abstand zwischen einer aktuellen Lage der Hinterachse (4) und der Zielposition (1; 2) in Richtung einer Längsachse (3) der Parklücke ist unterhalb eines ersten Schwellenwerts,
• ein Abstand zwischen der aktuellen Lage der Hinterachse (4) und der Zielposition (1; 2) in Richtung senkrecht zu der Längsachse (3) der Parklücke ist unterhalb eines zweiten Schwellenwerts (Δx), und
• ein Winkel (∂) zwischen einer Längsachse (6) des Fahrzeugs (10) und der Längsachse (3) der Parklücke ist kleiner als ein dritter Schwellenwert.

6. Einparkassistenzsystem für ein Fahrzeug (10),
wobei das Einparkassistenzsystem (20) eine Steuerung (7), mindestens einen Sensor (16) zum Vermessen einer Umgebung des Fahrzeugs (10) und mindestens einen Zustandserfassungssensor (18) umfasst,
wobei der mindestens eine Sensor (16) zur Bestimmung einer Zielposition (1) des Fahrzeugs (10) innerhalb einer Parklücke ausgestaltet ist, wobei die Steuerung (7) bei einem Erreichen der Zielposition (1) durch das Fahrzeug (10) einen Einparkvorgang des Einparkassistenzsystems (20) erfolgreich beendet,
wobei der mindestens eine Zustandserfassungssensor (18) zur Erfassung eines Zustands des Fahrzeugs (10) während des Einparkvorgangs, welcher ein Erreichen der Zielposition (1) verhindert, ausgestaltet ist, und
wobei die Steuerung (7) derart ausgestaltet ist, dass sie einen Lenkeingriff des Assistenzsystems (20) in eine Lenkung (8) des Fahrzeugs (10) aktiviert, um den Einparkvorgang des Einparkassistenzsystems (20) durchzuführen, und dass sie den Einparkvorgang mit der Zielposition (2) fortsetzt,
**dadurch gekennzeichnet,**
**dass** die Steuerung (7) zusätzlich derart ausgestaltet ist, dass sie die Zielposition (2) abhängig von dem Zustand neu bestimmt und beim Fortsetzen des Einparkvorgangs den Einparkvorgang mit der neubestimmten Zielposition (2) fortsetzt,

7. Einparkassistenzsystem nach Anspruch 6, **dadurch gekennzeichnet, dass** das Einparkassistenzsystem (20) zur Durchführung des Verfahrens nach einem der Ansprüche 1-5 ausgestaltet ist.

8. Fahrzeug mit einem Einparkassistenzsystem (20) nach Anspruch 5 oder 6.

## Claims

1. Method for parking a vehicle (10) using a parking assistant system (20), comprising the steps
automatically determining a target position (1) of the vehicle (10) within a parking space, wherein when the target position (1) is reached by the vehicle (10) a parking process of the parking assistant system (20) is successfully ended,
automatically activating a steering intervention into a steering system (8) of the vehicle (10) in order to carry out the parking process of the parking assistant system (20),
automatically detecting a state of the vehicle (10) during the parking process which prevents the target position (1) from being reached, and automatically continuing the parking process with the target position (2),
**characterized by**
automatically newly determining the target position (2) as a function of the state, and **characterized in that**
the automatic continuation of the parking process is carried out with the target position (2) which was redetermined.

2. Method according to Claim 1,
**characterized**
**in that** the parking space is a lateral parking space, and
**in that** the state is present if a gearspeed change from a reverse gearspeed of the vehicle (10) into a forward gearspeed of the vehicle (10) is detected at a time at which the vehicle (10) covers at least part of the parking space and a sufficiently small oblique position of the vehicle (10) with respect to the parking space is present.

3. Method according to Claim 2,
**characterized**
**in that** the vehicle (10) covers at least part of the parking space if a difference (Δy) which is defined between a front end (x) of the parking space and a rear axle (4) of the vehicle (10) is positive, and
**in that** the sufficiently small oblique position of the vehicle (10) with respect to the parking space is present if an angle (∂) between a longitudinal axis (6) of the vehicle (10) and a longitudinal axis (3) of the parking space is smaller than a predetermined angle.

4. Method according to Claim 2 or 3,
**characterized**
**in that** the target position corresponds to a target distance which is defined between a rear axle (4) of the vehicle (10) and a front end (x) of the parking space,
and **in that** the target distance is redetermined as a function of the state in that the target distance is determined to be equal to a distance between a current position of the rear axle (4) of the vehicle (10) and the front end (x) of the parking space minus a predetermined offset (y_{offset}).

5. Method according to one of the preceding claims, **characterized**
**in that** the target position defines a target position (1; 2) of a rear axle (4) of the vehicle (10), and
**in that** the parking process is successfully ended if the following three conditions are satisfied:
• a distance between a current position of the rear axle (4) and the target position (1; 2) in the direction of a longitudinal axis (3) of the parking space is below a first threshold value,
• a distance between the current position of the rear axle (4) and the target position (1; 2) in the direction perpendicular to the longitudinal axis (3) of the parking space is below a second threshold value (Δx), and
• an angle (∂) between a longitudinal axis (6) of the vehicle (10) and the longitudinal axis (3) of the parking space is smaller than a third threshold value.

6. Parking assistant system for a vehicle (10),
wherein the parking assistant system (20) comprises a controller (7), at least one sensor (16) for measuring the surroundings of the vehicle (10) and at least one state-detecting sensor (18), wherein the at least one sensor (16) is configured to determine a target position (1) of the vehicle (10) within a parking space, wherein the controller (7) successfully ends a parking process of the parking assistant system (20) when the target position (1) is reached by the vehicle (10),
wherein the at least one state-detecting sensor (18) is configured to detect a state of the vehicle (10) during the parking process which prevents the target position (1) from being reached, and
wherein the controller (7) is configured in such a way that it activates a steering intervention of the assistant system (20) into a steering system (8) of the vehicle (10) in order to carry out the parking process of the parking assistant system (20), and in that said controller (7) continues the parking process with the target position (2), **characterized**
**in that** the controller (7) is additionally configured in such a way that it newly determines the target position (2) as a function of the state, and when the parking process is continued it continues the parking process with the redetermined target position (2).

7. Parking assistant system according to Claim 6, **characterized in that** the parking assistant system (20) is configured to carry out the method according to one of Claims 1-5.

8. Vehicle having a parking assistant system (20) according to Claim 5 or 6.

## Revendications

1. Procédé de stationnement d'un véhicule (10) utilisant un système d'assistance au stationnement (20), comprenant les étapes suivantes :
détermination automatique d'une position cible (1) du véhicule (10) à l'intérieur d'une place de stationnement, un processus de stationnement du système d'assistance au stationnement (20) s'achevant avec succès lorsque la position cible (1) est atteinte par le véhicule (10) ;
activation automatique d'une intervention de direction dans une direction (8) du véhicule (10), pour exécuter le processus de stationnement du système d'assistance au stationnement (20) ;
détection automatique d'un état du véhicule (10) empêchant d'atteindre la position cible (1) pendant le processus de stationnement ; et
poursuite automatique du processus de stationnement avec la position cible (2) ;
**caractérisé par** :
la re-détermination automatique de la position cible (2) en fonction de l'état ; et
la réalisation de la poursuite automatique du processus de stationnement avec la position cible (2).

2. Procédé selon la revendication 1, **caractérisé en ce que** :
la place de stationnement est une place de stationnement transversale ; et
lorsqu'un état indiquant un changement de rapport d'un rapport de marche arrière du véhicule (10) dans un rapport de marche avant du véhicule (10) est déterminé à un instant auquel le véhicule (10) recouvre au moins une partie de la place de stationnement et en présence d'une position oblique suffisamment réduite du véhicule (10) par rapport à la place de stationnement.

3. Procédé selon la revendication 2, **caractérisé en ce que** :
le véhicule (10) recouvre au moins une partie de la place de stationnement lorsqu'une différence (Δy) définie entre une extrémité avant (x) de la place de stationnement et un essieu arrière (4) du véhicule (10) est positive ; et
on reconnaît la position oblique suffisamment réduite du véhicule (10) par rapport à la place de stationnement lorsqu'un angle (∂) entre un axe longitudinal (6) du véhicule (10) et un axe longitudinal (3) de la place de stationnement est inférieur à un angle prédéfini.

4. Procédé selon la revendication 2 ou 3, **caractérisé en ce que** la position cible correspond à une distance cible définie entre un essieu arrière (4) du véhicule (10) et une extrémité avant (x) de la place de stationnement et que la distance cible est redéfinie en fonction de l'état dans lequel la distance cible est égale à une distance entre une position actuelle de l'essieu arrière (4) du véhicule (10) et l'extrémité avant (x) de la place de stationnement, déduction faite d'un décalage (y_{offset}) prédéfini.

5. Procédé selon l'une quelconque des revendications précédentes, **caractérisé en ce que** :
la position cible définit une position cible (1 ; 2) d'un essieu arrière (4) du véhicule (10) ; et
le processus de stationnement s'achève avec succès lorsque les trois conditions suivantes sont remplies :
- une distance entre une position actuelle de l'essieu arrière (4) et la position cible (1 ; 2) en direction d'un axe longitudinal (3) de la place de stationnement se situe en dessous d'une première valeur seuil ;
- une distance entre la position actuelle de l'essieu arrière (4) et la position cible (1 ; 2) dans la direction perpendiculaire à l'axe longitudinal (3) de la place de stationnement se situe en dessous d'une deuxième valeur seuil (Δx) ; et
- un angle (∂) entre un axe longitudinal (6) du véhicule (10) et l'axe longitudinal (3) de la place de stationnement est inférieur à une troisième valeur seuil.

6. Système d'assistance au stationnement pour un véhicule (10) ;
le système d'assistance au stationnement (20) comprenant une commande (7), au moins un capteur (16) permettant de mesurer un environnement du véhicule (10) et au moins un capteur de détection d'état (18) ;
l'au moins un capteur (16) étant conçu pour déterminer une position cible (1) du véhicule (10) à l'intérieur d'une place de stationnement, la commande (7) mettant fin avec succès à un processus de stationnement du système d'assistance au stationnement (20) lorsque la position cible (1) est atteinte par le véhicule (10) ; l'au moins un capteur de détection d'état (18) étant conçu pour détecter un état du véhicule (10) empêchant d'atteindre la position cible (1) pendant le processus de stationnement ; et
la commande (7) étant configurée de telle sorte qu'elle active une intervention de direction réalisée par le système d'assistance (20) dans une direction (8) du véhicule (10), pour effectuer le processus de stationnement du système d'assistance au stationnement (20) et qu'elle poursuit le processus de stationnement avec la position cible (2) ;
**caractérisé en ce que** :
la commande (7) est en outre configurée de façon à redéfinir la position cible (2) en fonction de l'état et
à poursuivre le processus de stationnement avec la position cible (2) redéfinie en cas de poursuite du processus de stationnement.

7. Système d'assistance au stationnement selon la revendication 6, **caractérisé en ce que** le système d'assistance au stationnement (20) est configuré pour mettre en oeuvre le procédé selon l'une quelconque des revendications 1 à 5.

8. Véhicule équipé d'un système d'assistance au stationnement (20) selon la revendication 5 ou 6.
